# EUROPÄISCHE PATENTSCHRIFT

(11) **EP 3 737 607 B1**
(45) Veröffentlichungstag und Bekanntmachung des Hinweises auf die Patenterteilung: **05.04.2023**
(21) Anmeldenummer: 19719812.0
(22) Anmeldetag: 23.04.2019
(51) Int. Cl.: B64C 39/02, B08B 5/00, B60S 1/56, B60S 3/04

(54) **VERFAHREN ZUR REINIGUNG VON FAHRZEUGSENSOREN UND UNBEMANNTES FLUGGERÄT FÜR EIN SOLCHES VERFAHREN**
METHOD FOR CLEANING VEHICLE SENSORS AND UNMANNED AIRCRAFT FOR SUCH A METHOD
PROCÉDÉ POUR NETTOYER DES CAPTEURS DE VÉHICULE ET AÉRONEF SANS PILOTE PERMETTANT DE METTRE EN OEUVRE CE PROCÉDÉ

(30) Priorität: 26.04.2018 DE 102018206520
(43) Veröffentlichungstag der Anmeldung: 18.11.2020
(73) Patentinhaber: VOLKSWAGEN AKTIENGESELLSCHAFT, 38440 Wolfsburg (DE)
(72) Erfinder: SCHÜTZ, Daniel, 38165 Lehre (DE); HEROLD, Stephan, 38106 Braunschweig (DE); FONDAHL, Kristin, 38106 Braunschweig (DE); HELBIG, Micha, 38100 Braunschweig (DE)
(86) Internationale Anmeldenummer: PCT/EP2019/060264
(87) Internationale Veröffentlichungsnummer: WO 2019/206849

(56) Entgegenhaltungen:
- DE-A1- 10 332 939
- DE-A1-102018 115 966
- GB-A- 2 552 092
- US-A1- 2017 121 019
- US-A1- 2017 129 602
- US-A1- 2018 061 148

## Beschreibung

Die vorliegende Erfindung betrifft ein Verfahren zur Reinigung von Fahrzeugsensoren, insbesondere zur Reinigung von Fahrzeugsensoren eines autonom fahrenden Fahrzeugs. Die vorliegende Erfindung betrifft weiterhin ein unbemanntes Fluggerät für ein solches Verfahren.

In heutigen Fahrzeugen ist eine Vielzahl von Sensoren verbaut. So erfolgt für Fahrerassistenzsysteme eine kontinuierliche Überwachung des Fahrzeugumfelds durch Sensoren um den Fahrer bei der Fahraufgabe zu unterstützen und ihn frühzeitig über potentielle Gefahrensituationen zu informieren. Noch größere Bedeutung kommt der sensorischen Erfassung des Fahrzeugumfelds für autonom fahrende Fahrzeuge zu, da nur bei einer Erfassung der Fahrbahn und potentieller Hindernisse ein automatisches Fahren selbstfahrender Fahrzeuge möglich ist. Zur Umfelderkennung können verschiedenartige Sensoren, die auf unterschiedlichen Technologien beruhen, eingesetzt werden, wobei häufig durch eine Kombination der Daten verschiedener Sensoren, d.h. durch die sogenannte Sensor-Fusion, ein besonders verlässliches Abbild der Umgebung generiert wird. Neben Radar- und Ultraschallsensoren kommen hierbei insbesondere Sensoren, die auf einer optischen Erfassung der Umgebung beruhen, zum Einsatz.

So können detaillierte Bildinformationen von einer oder mehreren auf das Fahrzeugumfeld gerichteten Kameras ausgewertet werden, wobei auch Verkehrszeichen oder andere Objekte und, bei Verwendung einer Stereokamera, auch die Entfernung und Geschwindigkeit potentieller Hindernisse erkannt werden kann. Ebenso kann durch einen oder mehrere Lidarsensor (Light Detection and Ranging) das Fahrzeugumfeld mit Laserlicht hochaufgelöst und unabhängig von den äußeren Lichtverhältnissen abgescannt und vermessen werden.

Insbesondere für autonom fahrende Fahrzeuge ist es erforderlich, dass die sensorische Erfassung des Fahrzeugumfelds jederzeit fehlerfrei funktioniert. Nur so ist beispielsweise gewährleistet, dass Hindernisse frühzeitig erkannt werden und angemessen reagiert werden kann. Bei einer Verdreckung der Sensoren, insbesondere bei optischen Verfahren wie LIDAR, kann es jedoch dazu kommen, dass das Fahrzeugumfeld nicht mehr richtig erfasst werden kann und das Fahrzeug die Fahrt nicht gefahrlos weiterführen kann.

In diesem Fall muss der Sensor gereinigt werden bevor eine sichere Fortsetzung der Fahrt erfolgen kann. Hierfür kann ein Passagier aufgefordert werden nach einem Anhalten des Fahrzeugs auszusteigen und den Sensor zu reinigen. Bei einer Leerfahrt eines autonom fahrenden Fahrzeuges wäre dieses Fahrzeug jedoch auf externe Hilfe angewiesen da kein Passagier aussteigen könnte um die Verschmutzung zu entfernen. Weiterhin könnte das Fahrzeug eine Autowaschanlage anfahren, wenn die Verschmutzung früh genug erkannt wurde und der aktuelle Verschmutzungsgrad dieses noch zulässt.

Ebenso könnten automatische Reinigungssysteme für die verschiedenen Sensoren am Fahrzeug fest verbaut werden, wobei alle sicherheitskritischen Sensoren mit derartigen Reinigungssystemen ausgestattet werden müssten. Dieses würde jedoch die Kosten des Fahrzeugs erhöhen und würde auch zusätzlichen Bauraum für die Reinigungssysteme erfordern.

Insbesondere wenn starke Verschmutzungen der Sensoren eher selten vorkommen sollten, könnte es über die Lebensdauer des Fahrzeugs hinweg kostengünstiger sein statt der Verwendung automatischer Reinigungssysteme bei einer Verschmutzung einen Servicedienstleister zu beauftragen, der die Verschmutzung manuell beseitigen könnte.

Hierfür würde der Servicedienstleister im Bedarfsfall zu dem betroffenen Fahrzeug fahren um den verschmutzten Sensor zu reinigen. Dies könnte allerdings je nach Entfernung, Verkehrsführung und Verkehrsaufkommen eine unter Umständen lange Zeit in Anspruch nehmen. Während dieses Zeitraums könnte das Fahrzeug dann seine Fahraufgabe nicht ausführen, was insbesondere bei zeitkritischen Transportaufgaben zu Problemen führen könnte.

Für unbewegliche Güter wie Gebäude ist es bekannt für die Reinigung unbemannte Fluggeräte einzusetzen. So ist aus der DE 10 2014 009 903 A1 ein Verfahren zur Steuerung eines Flugkörpers zur Reinigung von Glasfassaden oder Oberflächen von Solarmodulen eines Solarkraftwerkes bekannt. Die Reinigung der Oberfläche kann durch eine Reinigungsapparatur am Flugkörper, beispielsweise eine Bürste oder durch den mit einem Rotor verursachten Luftstrom, erfolgen, wobei die Reinigungsapparatur unabhängig von der Flugsteuerung angesteuert werden kann. Das Verfahren umfasst das Erfassen der Oberfläche eines zu reinigenden Objekts, richtet den Flugkörper gegenüber dieser aus und strukturiert die Flugbahn. Dadurch kann die Fläche besonders effizient gereinigt werden.

Ebenso beschreibt die DE 10 2014 116 821 A1 ein unbemanntes Rotorfluggerät, das zum Bearbeiten einer Oberfläche, beispielsweise einer Gebäudewand, eingesetzt werden kann. Das unbemannte Rotorfluggerät weist hierbei einen Anschlussbereich für einen Schlauch für eine außerhalb des Rotorfluggeräts in einem Behälter vorgehaltene pumpbare Nutzlast und ein Arbeitsgerät zur Verarbeitung der Nutzlast auf. Beispielsweise kann die Nutzlast auf eine in der Umgebung des Fluggeräts befindliche Oberfläche aufgebracht oder von dem Fluggerät aus in die Luft versprüht werden. Das Arbeitsgerät kann als Pinsel oder Farbrolle oder als Düse zum Aufbringen von Farbe auf Gebäudefassaden, als Sandstrahlgerät zum Reinigen von Gebäudefassaden oder als Fensterputzgerät ausgebildet sein.

Die WO 2013/076711 A2 offenbart ferngesteuerte Mini-Helikopter mit Reinigungsbürsten zur Glasreinigung von den Fassaden hoher Gebäude einzusetzen, die sich hierfür gegenüber dem zu reinigenden Glas auf und ab bewegen. Die Mini-Helikopter sind während des Reinigungsvorgangs mit dachmontierten Sicherheitsseilen und mit einem Lastkraftwagen verbunden. Der Lastkraftwagen versorgt die Mini-Helikopter mit Reinigungsflüssigkeit und weist ein Steuerpanel in der Lastwagenkabine auf, um den Reinigungsprozess zu überwachen und zu steuern.

Schließlich beschreibt die US 2017/121019 A1 einen intelligenten Autowaschroboter in Form einer Drohne. Diese kann sowohl schmutzige Bereiche als auch die Form eines Fahrzeugs erfassen, während sie unbemannt um das Fahrzeug herumfliegt, um basierend darauf eine automatische Autowäsche durchzuführen. Nach der automatischen Autowäsche kann die Drohne anhand von Positionsinformationen einer Basisstation zu dieser Basisstation fliegen und dort landen, um Waschflüssigkeit nachzufüllen und den für die Reinigung verwendeten Wischer auszutauschen.

Es ist eine Aufgabe der Erfindung, ein verbessertes Verfahren zur Reinigung von Fahrzeugsensoren, insbesondere zur Reinigung von Fahrzeugsensoren eines autonom fahrenden Fahrzeugs, zur Verfügung zu stellen.

Diese Aufgabe wird durch ein Verfahren mit den Merkmalen des Anspruchs 1, sowie durch ein entsprechendes unbemanntes Fluggerät gemäß Anspruch 6 gelöst. Bevorzugte Ausgestaltungen der Erfindung sind Gegenstand der abhängigen Ansprüche.

Bei dem erfindungsgemäßen Verfahren zur Reinigung von Fahrzeugsensoren werden Positionsdaten eines Fahrzeugs empfangen. Ein für die Reinigung von Fahrzeugsensoren geeignetes unbemanntes Fluggerät fliegt basierend auf den empfangenen Positionsdaten des Fahrzeugs zu dem Fahrzeug, positioniert sich basierend auf Lagedaten eines zu reinigenden Sensors des Fahrzeugs so in der Nähe des Fahrzeugs, dass eine Reinigung des zu reinigenden Sensors möglich ist und reinigt den Sensor. Das Fahrzeug sendet über eine mobile Datenverbindung einer Servicestation die Positionsdaten des Fahrzeugs. Die Servicestation empfängt die gesendeten Positionsdaten und veranlasst daraufhin das unbemannte Fluggerät zu dem Fahrzeug zu fliegen. Nach Beendigung des Reinigungsvorgangs kehrt dann das unbemannte Fluggerät zur Servicestation zurück.

Während unbemannte Fluggeräte bisher nur für die Reinigung unbewegliche Güter eingesetzt wurden, kann erfindungsgemäß auch die Reinigung eines Fahrzeugsensors durch die Kenntnis und Verwendung der Positionsdaten des Fahrzeugs und der Lagedaten des zu reinigenden Sensors durch ein geeignetes unbemanntes Fluggerät erfolgen. Da sich das unbemannte Fluggerät unabhängig von Ampeln und Verkehr auf direkter Luftlinie zu dem Fahrzeug begeben kann, kann es das Fahrzeug sehr schnell erreichen, sodass ein verschmutzter Sensor unverzüglich gereinigt werden und eine gegebenenfalls unterbrochene Fahrt fortgesetzt werden kann. Es kann daher auch darauf verzichtet werden, die Fahrzeuge mit zusätzlichen Sensor-Reinigungssystemen auszustatten, so dass die oben genannten Nachteile umgangen werden können.

Bei einer solchen Servicestation können eine Vielzahl von unbemannten Fluggeräten vorgehalten werden, so dass selbst bei Abdeckung eines größeren geographischen Bereichs sichergestellt werden kann das selbst bei mehreren gleichzeitig eintreffenden Anfragen zur Reinigung von Sensoren verschiedener Fahrzeuge alle Fahrzeuge zeitnah aufgesucht werden können.

Gemäß einer Ausführungsform der Erfindung wird die Verschmutzung des Sensors durch das Fahrzeug erfasst. Dieses ermöglicht, unmittelbar auf die Verschmutzung zu reagieren und gezielt die Reinigung eines Sensors anzufordern, wenn dieser verschmutzt ist und so die Weiterfahrt des Fahrzeugs gefährdet.

So kann vorteilhafterweise ein autonom fahrendes Fahrzeug automatisch angehalten werden, wenn ein sicherer Fahrbetrieb aufgrund der Verschmutzung des Sensors nicht mehr gewährleistet ist.

Auf diese Weise kann eine Gefährdung für das Fahrzeug oder andere Verkehrsteilnehmer vermieden werden, wenn ein Passagier des autonom fahrenden Fahrzeugs nicht auf Aufforderung zur Reinigung des Sensors reagiert oder das Fahrzeug eine Leerfahrt ausführt.

Ebenso kann vorteilhafterweise das Fahrzeug der Servicestation über die mobile Datenverbindung eine Angabe über den verschmutzten Sensor senden. Dieses ermöglicht der Servicestation beispielsweise die Dringlichkeit der Reinigung zu beurteilen oder bei unterschiedlicher Eignung verschiedener unbemannter Fluggeräte für die Reinigung des verschmutzten Sensors das geeignete Fluggerät auszuwählen.

Weiterhin kann das Fahrzeug der Servicestation über die mobile Datenverbindung eine Information über das Fahrzeugmodell und/oder die Lagedaten des zu reinigenden Sensors im fahrzeugfesten Koordinatensystem zusenden und die Servicestation die Information über das Fahrzeugmodell und/oder die Lagedaten oder hiervon abgeleitete Daten an das unbemannte Fluggerät zusenden. Da die Sensoren bei verschiedenen Fahrzeugmodellen an unterschiedlichen Bereichen der Fahrzeugkarosserie verbaut sind, erleichtert dieses dem Fluggerät den zu reinigenden Sensor am Fahrzeug aufzufinden und sich für die Reinigung geeignet zu positionieren.

Entsprechend umfasst ein erfindungsgemäßes unbemanntes Fluggerät zur Reinigung von Fahrzeugsensoren
- eine Antriebseinheit mit einer Anzahl von motorbetriebenen Rotoren, die einen Auftrieb und/oder Vortrieb für das unbemannte Fluggerät erzeugen;
- eine Navigationseinheit zur Navigation zu einem Fahrzeug basierend auf Positionsdaten des Fahrzeugs und zur Navigation an dem Fahrzeug basierend auf Lagedaten eines zu reinigenden Sensors des Fahrzeugs;
- eine Steuereinheit, die mittels Navigationsdaten der Navigationseinheit die Antriebseinheit so ansteuert, dass das unbemannte Fluggerät zu dem Fahrzeug fliegen und sich so in der Nähe des Fahrzeugs positionieren kann, dass eine Reinigung des zu reinigenden Sensors möglich ist;
   eine Reinigungseinheit und eine Kameraeinheit (11),
   dadurch gekennzeichnet, dass
      - eine Auswerteeinheit (12) vorgesehen ist, die dazu ausgebildet ist, für einen mittels der Kameraeinheit optisch erfassten zu reinigenden Sensor die Position des Sensors relativ zu dem unbemannten Fluggerät zu ermitteln;
      - die Steuereinheit (10) dazu ausgebildet ist, mittels Navigationsdaten der Navigationseinheit die Antriebseinheit so anzusteuern, dass das unbemannte Fluggerät basierend auf Positionsdaten eines Fahrzeugs, welche eine Servicestation über eine mobile Datenverbindung von dem Fahrzeug empfangen hat, zu dem Fahrzeug zu fliegen und sich so an dem Fahrzeug basierend auf Lagedaten eines zu reinigenden Sensors (7) des Fahrzeugs zu positionieren, dass eine Reinigung des zu reinigenden Sensors möglich ist und nach Beendigung des Reinigungsvorgangs zur Servicestation zurückzukehren; und
- die Reinigungseinheit (13-18) dazu ausgebildet ist, die Reinigung des zu reinigenden Sensors durchzuführen.

Gemäß einer Ausführungsform der Erfindung weist die Reinigungseinheit einen Drucklufttank auf, der mit einem elektronisch ansteuerbaren Ventil gefolgt von einem Druckminderer und einem Druckluft-Reinigungsgerät verbunden ist.

Da bei dieser Ausführungsform eine kontaktlose Reinigung erfolgt, ermöglicht dieses auch bei schlechteren Wetterbedingungen wie beispielsweise starkem oder böigen Wind eine vergleichsweise einfache Navigation des unbemannten Fluggerätes.

Hierbei weist die Reinigungseinheit vorteilhafterweise einen Flüssigkeitstank für eine Reinigungsflüssigkeit auf, wobei die Reinigungsflüssigkeit der Druckluft beigemengt wird, sodass die zu reinigende Fläche mit einem Luft-Flüssigkeitsgemisch bestrahlt wird.

Durch die Verwendung einer Reinigungsflüssigkeit kann die Reinigungswirkung insbesondere bei festsitzenden Verunreinigungen deutlich erhöht werden.

Gemäß einer weiteren Ausführungsform der Erfindung kann die Reinigungseinheit durch eine Seilwinde oder einen Teleskopstab heruntergelassen werden, um die Reinigungseinheit vor dem zu reinigenden Sensor zu positionieren.

Da bei dieser Ausführungsform die Reinigungseinheit nicht starr mit dem unbemannten Fluggerät verbunden ist, kann dieses über dem Fahrzeug fliegen und lediglich den Reinigungsapparat herunterlassen, was beispielsweise bei beengten Platzverhältnissen von Vorteil sein kann.

Hierbei weist die Reinigungseinheit vorteilhafterweise folgendes auf:
- eine oder mehrere motorbetriebene Reinigungsbürsten, die zur Reinigung des zu reinigenden Sensors in Rotation versetzt werden;
- einen Reinigungsflüssigkeitstank;
- eine Düse, mit der die Reinigungsflüssigkeit auf den zu reinigenden Sensor gesprüht wird;
- eine Pumpe, die Reinigungsflüssigkeit aus dem Reinigungsflüssigkeitstank entnimmt und der Düse zuführt; und
- einen motorbetriebenen Propeller, der so angeordnet ist, dass für die Reinigungsbürsten ein Anpressdruck auf den zu reinigenden Sensor erzeugt wird.

Weitere Merkmale der vorliegenden Erfindung werden aus der nachfolgenden Beschreibung und den Ansprüchen in Verbindung mit den Figuren ersichtlich.
- Fig. 1: zeigt schematisch das erfindungsgemäße Verfahren zur Reinigung von Fahrzeugsensoren mit einem unbemannten Fluggerät;
- Fig. 2: zeigt schematisch eine erste Ausführungsform eines erfindungsgemäßen unbemannten Fluggeräts; und
- Fig. 3: zeigt schematisch eine Seitenansicht (a) und Draufsicht (b) einer zweiten Ausführungsform eines erfindungsgemäßen unbemannten Fluggeräts.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung, wie er in den Ansprüchen definiert ist, zu verlassen.

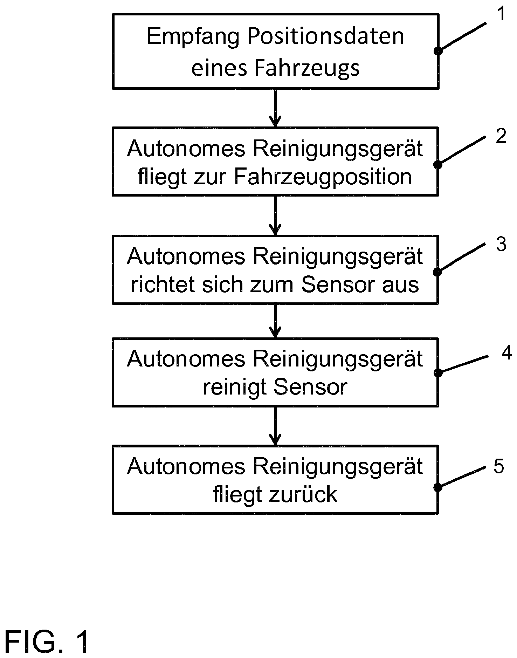

Figur 1 zeigt schematisch ein Ablaufdiagramm eines erfindungsgemäßen Verfahrens. Zunächst muss die Position des Fahrzeugs, bei dem eine Reinigung eines Sensors durchgeführt werden soll, ermittelt werden. Dieses kann beispielsweise mittels eines GPS-Empfängers eines Navigationssystems des Fahrzeugs erfolgen. Das Fahrzeug sendet die aktuellen Positionsdaten des Fahrzeugs dann über eine mobile Datenverbindung einer Servicestation, die mindestens ein unbemanntes Fluggerät, vorzugsweise aber eine Vielzahl solcher Fluggeräte, zur Reinigung der Fahrzeugsensoren betreibt. Eine solche Servicestation kann beispielsweise durch die Fahrzeughersteller selbst, Werkstätten für Kraftfahrzeuge oder auf die Reinigung von Fahrzeugsensoren spezialisierte Serviceunternehmen betrieben werden.

Bei dem unbemannten Fluggerät kann es sich hierbei insbesondere um einen sogenannten Multicopter mit mehreren motorbetriebenen Rotoren handeln, wie zum Beispiel einen Tricopter (mit drei Motoren), Quadrocopter (mit vier Motoren), Hexacopter (mit sechs Motoren) oder Octocopter (mit acht Motoren), der mit einer weiter unten beschriebenen Reinigungseinheit zur Reinigung der Fahrzeugsensoren versehen ist.

Die Positionsdaten des Fahrzeugs werden dann in einem Verfahrensschritt 1 von dem unbemannten Fluggerät über die Servicestation empfangen. Es ist aber auch möglich, dass die aktuellen Positionsdaten des Fahrzeugs über die mobile Datenverbindung direkt an ein in der Nähe des Fahrzeugs befindliches unbemanntes Fluggerät gesendet und von diesem direkt empfangen werden.

Die Servicestation veranlasst daraufhin ein unbemanntes Fluggerät sich für die Reinigung der Sensoren zu dem Fahrzeug zu bewegen, welches dann in Verfahrensschritt 2 zu der Fahrzeugposition des Fahrzeugs fliegt. Das unbemannte Fluggerät kann sich bei der Servicestation befinden und dort aufgeladen und gegebenenfalls mit Reinigungsflüssigkeit versehen werden oder sich aber auch bereits im Flug, beispielsweise auf dem Rückflug von einer vorherigen Reinigung der Sensoren eines anderen Fahrzeugs befinden. Hierbei kann die Servicestationen unter den zur Verfügung stehenden unbemannten Fluggeräten eines basierend auf verschiedenen Kriterien auswählen. So kann beispielsweise, wenn eine Information darüber vorliegt, welcher Fahrzeugsensor zu reinigen ist, ein unbemanntes Fluggerät mit einer für diesen Fahrzeugsensor besonders geeigneten Reinigungseinheit ausgesendet werden. Ebenso kann bei einer besonderen Dringlichkeit der Reinigung ein unbemanntes Fluggerät ausgewählt werden, welches sich durch eine vergleichsweise hohe Fluggeschwindigkeit besonders schnell zu dem betroffenen Fahrzeug begeben kann. Ebenso kann hierfür, oder auch um die Flugkosten zu minimieren, ein sich möglichst nah an dem betroffenen Fahrzeug bereits im Flug befindliches unbemanntes Fluggerät zu diesem Fahrzeug geschickt werden.

Wenn davon ausgegangen werden kann, dass das Fahrzeug seit der ursprünglichen Übermittlung der Positionsdaten seine Position nicht verändert hat, beispielsweise, weil das Fahrzeug beim Übertragen der Positionsdaten bereits am Fahrbahnrand angehalten wurde um auf die Reinigung der Sensoren zu warten, so entspricht die angeflogene Fahrzeugposition den ursprünglichen Positionsdaten des Fahrzeugs. Für diese Fahrzeugposition wird dann die Flugroute des unbemannten Fluggerätes, entweder von der Servicestation oder von dem unbemannten Fluggerät selbst, ermittelt.

Ebenso kann sich das Fahrzeug aber auch seit der ursprünglichen Übertragung der Positionsdaten weiterbewegt haben. In diesem Fall kann vorgesehen sein, dass das Fahrzeug beispielsweise in regelmäßigen Abständen seine jeweils aktuelle Position überträgt, sodass die Flugroute des unbemannten Fluggerätes angepasst werden kann. Ebenso kann vorgesehen werden, dass bei der ursprünglichen Übertragung der Positionsdaten von einem Navigationsgerät des Fahrzeugs Daten zu einer einprogrammierten Route übertragen werden und für eine Schätzung zukünftiger Positionsdaten verwendet werden. So kann sich das unbemannte Fluggerät beispielsweise zu dem Fahrziel der einprogrammierten Route begeben um dort die Reinigung des Fahrzeugsensors vorzunehmen. Ebenso kann basierend auf den Routen und voraussichtlichen Geschwindigkeiten des Fahrzeuges und des unbemannten Fluggerätes ein möglichst früher Rendezvouspunkt ermittelt werden.

Nachdem das unbemannte Fluggerät die Fahrzeugposition erreicht hat, richtet es sich in einem Verfahrensschritt 3 zu dem zu reinigenden Fahrzeugsensor aus. Hierfür können Lagedaten des zu reinigenden Sensors ausgewertet werden, die dem unbemannten Fluggerät von der Servicestation oder von dem Fahrzeug übermittelt werden können oder aber auch unmittelbar in einem Speicher des unbemannten Fluggeräts vorliegen können. Ebenso können durch einen oder mehrere an dem unbemannten Fluggerät befindliche Sensoren die Fahrzeugsensoren erfasst werden. So kann beispielsweise mit einer Kamera und einem geeigneten Bilderkennungsalgorithmus die genaue Lage des zu reinigenden Sensors ermittelt werden. Es kann auch vorgesehen werden, mittels der Kamera in der Nähe befindliche Personen, Gebäude oder andere Luftverkehrsteilnehmer zu erkennen um so gegebenenfalls ausweichen zu können und eine Kollision zu vermeiden. Ebenso kann hierfür aber auch eine separate Kamera verwendet werden.

Die Reinigung des Fahrzeugsensors mittels der Reinigungseinheit des unbemannten Fluggeräts erfolgt dann in Verfahrensschritt 4, wobei sichergestellt wird, dass während des Reinigungsprozesses die relative Lage des unbemannten Fluggeräts zu dem Fahrzeug beibehalten wird. Die Reinigung kann hierbei für eine vordefinierte Zeitdauer erfolgen, die erfahrungsgemäß zur Reinigung des jeweiligen Fahrzeugsensors ausreicht. Ebenso kann es aber auch vorgesehen sein, den Reinigungsfortschritt zu kontrollieren, beispielsweise durch eine optische Erfassung mittels der oben genannten Kamera.

Nach Beendigung des Reinigungsvorgangs fliegt das unbemannte Fluggerät dann vorzugsweise gemäß Verfahrensschritt 5 zur Servicestation zurück um dort wieder aufgeladen zu werden und so für neue Reinigungsaufgaben zur Verfügung stehen zu können. Es kann aber ebenso vorgesehen werden, dass das unbemannte Fluggerät zunächst noch ein anderes Fahrzeug für eine Reinigungsaufgabe anfliegt, bevor es zu der Servicestation zurückkehrt.

Sowohl der Flug zu dem Fahrzeug als auch die Reinigung des Fahrzeugsensors kann hierbei autonom durch das unbemannte Fluggerät erfolgen, insbesondere bei schwierigen Randbedingungen während der Flug- oder Reinigungsphase kann dieses aber auch von der Servicestation aus überwacht und kommandiert werden.

Neben einer Reinigung eines Fahrzeugsensors, die aufgrund einer erfassten Verschmutzung des Fahrzeugsensors möglichst umgehend erfolgt, ist es auch denkbar unabhängig von einer detektierten Verschmutzung bei im Laufe der Zeit zunehmenden Verschmutzungen eine Reinigung zu regelmäßigen Serviceintervallen vorzunehmen.

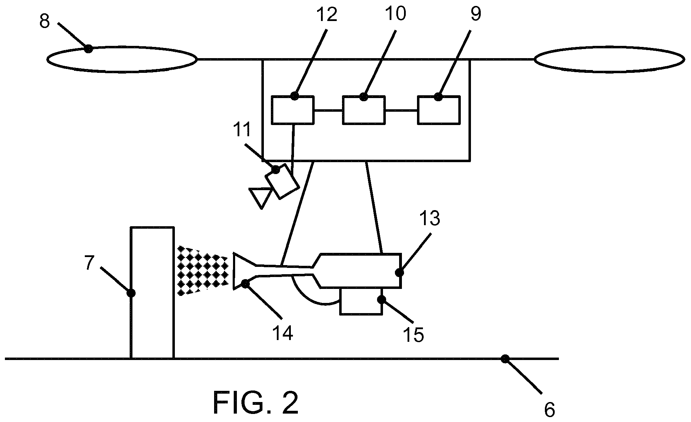

Eine erste Ausführungsform eines erfindungsgemäßen unbemannten Fluggeräts ist in Figur 2 schematisch dargestellt. Das unbemannte Fluggerät befindet sich hierbei über dem schematisch angedeuteten Fahrzeugdach 6 vor einem Sensor 7 des Fahrzeugs, beispielsweise einem auf dem Dach montierten Lidarsensor.

Das unbemannte Fluggerät weist eine Antriebseinheit mit einer Anzahl von motorbetriebenen Rotoren 8 auf, die einen Auftrieb und/oder Vortrieb für das unbemannte Fluggerät erzeugen. Weiterhin ist eine Navigationseinheit 9 zur Navigation zu dem Fahrzeug basierend auf Positionsdaten des Fahrzeugs und zur Navigation an dem Fahrzeug basierend auf Lagedaten des zu reinigenden Sensors vorgesehen. Eine Steuereinheit 10 steuert mittels Navigationsdaten von der Navigationseinheit 9 die Antriebseinheit so an, dass das unbemannte Fluggerät zu dem Fahrzeug fliegen und sich so in der Nähe des Fahrzeugs positionieren kann, dass eine Reinigung des zu reinigenden Sensors 7 möglich ist. Für die zielgenaue Positionierung während des Reinigungsvorgangs ist eine Kameraeinheit 11 zur optischen Erfassung des zu reinigenden Sensors vorgesehen. Die erzeugten Bilddaten der Kameraeinheit 11 werden hierfür einer Auswerteeinheit 12 zugeführt, die mittels eines geeigneten Bilderkennungsalgorithmus die genaue Lage des zu reinigenden Sensors ermittelt und eine Information hierüber der Steuereinheit 10 zuführt.

Die eigentliche Reinigungseinheit zur Reinigung des Sensors ist bei dieser Ausführungsform wie folgt ausgestaltet. Es ist ein Drucklufttank 13 vorgesehen, der mit Druckluft befüllt wird. Der Drucklufttank 13 kann hierbei abnehmbar sein, sodass ein leerer Drucklufttank schnell mit einem bereits vorab gefüllten Drucklufttank ausgewechselt werden kann, wenn sich das unbemannte Fluggerät am Boden bei der Servicestation befindet, oder aber auch fest mit dem unbemannten Fluggerät verbunden sein.

Der Drucklufttank 13 ist mit einem elektronisch ansteuerbaren Ventil gefolgt von einem Druckminderer und einem Druckluft-Reinigungsgerät verbunden. Bei Betätigung des Ventils strömt die Luft dann über eine Düse 14 aus. Zusätzlich wird Reinigungsflüssigkeit aus einem Tank für die Reinigungsflüssigkeit 15 angezogen, wodurch die zu reinigende Fläche mit einem Gemisch aus einer Reinigungsflüssigkeit und Luft bestrahlt werden kann. Hierbei kann vorgesehen sein, die Lage der Düse beim Reinigungsvorgang durch hierfür vorgesehene Einstelleinrichtungen wie beispielsweise Servomotoren, anzupassen bzw. zu verändern.

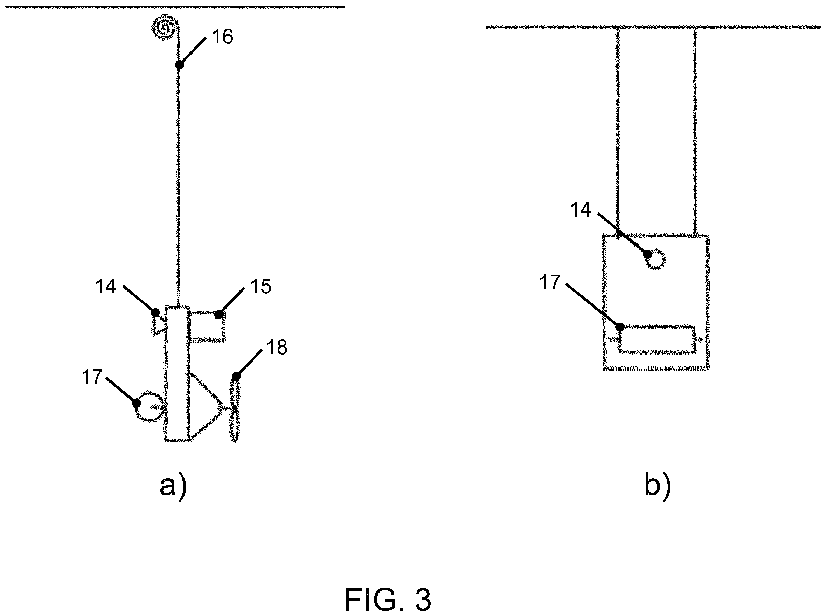

Eine Reinigungseinheit für eine zweite Ausführungsform des erfindungsgemäßen unbemannten Fluggeräts ist in Figur 3 schematisch dargestellt. Die Reinigungseinheit kann hierbei von dem unbemannten Fluggerät für den Reinigungsvorgang durch eine Seilwinde 16 oder einen Teleskopstab heruntergelassen werden und so vor dem zu reinigenden Sensor positioniert werden. Für die Reinigung sind eine oder mehrere Bürsten 17 vorgesehen, die durch Motoren in Rotation versetzt werden können. Weiterhin ist auch hier ein Tank 15 für eine Reinigungsflüssigkeit vorgesehen. Mit einer Pumpe wird die Reinigungsflüssigkeit über eine Düse 14 auf den zu reinigenden Sensor gesprüht. Die Bürsten 17 rotierenden daraufhin auf der zu reinigenden Stelle, wobei der erforderliche Anpressdruck durch einen oder mehrere gegenüberliegende motorbetriebenen Propeller 18 erzeugt wird. Nach dem Reinigungsvorgang wird die Reinigungseinheit wieder nach oben in die Ausgangsstellung befördert um beim Weiterflug oder Rückflug zur Servicestation nicht hinderlich zu sein.

Die Erfindung kann zur Reinigung von beliebigen außen zugänglichen Fahrzeugsensoren an beliebigen Fahrzeugen eingesetzt werden.

### Bezugszeichenliste

- 1: Verfahrensschritt, in dem Positionsdaten eines Fahrzeugs empfangen werden
- 2: Verfahrensschritt, in dem das unbemannte Fluggerät zur Fahrzeugposition fliegt
- 3: Verfahrensschritt, in dem das unbemannte Fluggerät sich zum Sensor ausrichtet
- 4: Verfahrensschritt, in dem das unbemannte Fluggerät den Sensor reinigt
- 5: Verfahrensschritt, in dem das unbemannte Fluggerät zur Servicestation zurückfliegt
- 6: Fahrzeugdach
- 7: Fahrzeugsensor
- 8: Rotor
- 9: Navigationseinheit
- 10: Steuereinheit
- 11: Kameraeinheit
- 12: Auswerteeinheit
- 13: Drucklufttank
- 14: Düse
- 15: Reinigungsflüssigkeitstank
- 16: Seilwinde
- 17: Bürste
- 18: motorbetriebener Propeller für Anpressdruck

## Patentansprüche

1. Verfahren zur Reinigung von Fahrzeugsensoren, bei dem
- ein Fahrzeug über eine mobile Datenverbindung einer Servicestation Positionsdaten des Fahrzeugs sendet;
- die Servicestation die Positionsdaten empfängt (1) und ein für die Reinigung von Fahrzeugsensoren geeignetes unbemanntes Fluggerät veranlasst, zu dem Fahrzeug zu fliegen;
- das unbemannte Fluggerät basierend auf den empfangenen Positionsdaten des Fahrzeugs zu dem Fahrzeug fliegt (2);
- das unbemannte Fluggerät sich basierend auf Lagedaten eines zu reinigenden Sensors des Fahrzeugs so in der Nähe des Fahrzeugs positioniert (3), dass eine Reinigung des zu reinigenden Sensors möglich ist;
- das unbemannte Fluggerät den Sensor (7) reinigt (4); und
- das unbemannte Fluggerät nach Beendigung des Reinigungsvorgangs zur Servicestation zurückkehrt (5).

2. Verfahren nach Anspruch 1, wobei die Verschmutzung des Sensors (7) durch das Fahrzeug erfasst wird.

3. Verfahren nach Anspruch 2, wobei ein autonom fahrendes Fahrzeug automatisch angehalten wird, wenn ein sicherer Fahrbetrieb aufgrund der Verschmutzung des Sensors nicht mehr gewährleistet ist.

4. Verfahren nach Anspruch 2 oder 3, wobei das Fahrzeug der Servicestation über die mobile Datenverbindung eine Angabe über den verschmutzten Sensor sendet.

5. Verfahren nach Anspruch 4, wobei das Fahrzeug der Servicestation über die mobile Datenverbindung eine Information über das Fahrzeugmodell und/oder die Lagedaten des zu reinigenden Sensors im fahrzeugfesten Koordinatensystem sendet und die Servicestation die Information über das Fahrzeugmodell und/oder die Lagedaten oder hiervon abgeleitete Daten an das unbemannte Fluggerät sendet.

6. Unbemanntes Fluggerät zur Reinigung von Fahrzeugsensoren, wobei das unbemannte Fluggerät eine Antriebseinheit mit einer Anzahl von motorbetriebenen Rotoren (8), die einen Auftrieb und/oder Vortrieb für das unbemannte Fluggerät erzeugen, eine Navigationseinheit (9), eine Steuereinheit (10), eine Reinigungseinheit (13-18) und eine Kameraeinheit (11) umfasst,
**dadurch gekennzeichnet, dass**
- eine Auswerteeinheit (12) vorgesehen ist, die dazu ausgebildet ist, für einen mittels der Kameraeinheit optisch erfassten zu reinigenden Sensor die Position des Sensors relativ zu dem unbemannten Fluggerät zu ermitteln;
- die Steuereinheit (10) dazu ausgebildet ist, mittels Navigationsdaten der Navigationseinheit die Antriebseinheit so anzusteuern, dass das unbemannte Fluggerät basierend auf Positionsdaten eines Fahrzeugs, welche eine Servicestation über eine mobile Datenverbindung von dem Fahrzeug empfangen hat, zu dem Fahrzeug zu fliegen und sich so an dem Fahrzeug basierend auf Lagedaten eines zu reinigenden Sensors (7) des Fahrzeugs zu positionieren, dass eine Reinigung des zu reinigenden Sensors möglich ist und nach Beendigung des Reinigungsvorgangs zur Servicestation zurückzukehren; und
- die Reinigungseinheit (13-18) dazu ausgebildet ist, die Reinigung des zu reinigenden Sensors durchzuführen.

7. Unbemanntes Fluggerät nach Anspruch 6, wobei die Reinigungseinheit einen Drucklufttank (13) aufweist, der mit einem elektronisch ansteuerbaren Ventil gefolgt von einem Druckminderer und einem Druckluft-Reinigungsgerät verbunden ist.

8. Unbemanntes Fluggerät nach Anspruch 7, wobei die Reinigungseinheit einen Reinigungsflüssigkeitstank (15) aufweist und die Reinigungsflüssigkeit der Druckluft beigemengt wird, sodass die zu reinigende Fläche mit einem Luft-Flüssigkeitsgemisch bestrahlt wird.

9. Unbemanntes Fluggerät nach Anspruch 6, wobei die Reinigungseinheit durch eine Seilwinde (16) oder einen Teleskopstab heruntergelassen werden kann, um die Reinigungseinheit vor dem zu reinigenden Sensor zu positionieren.

10. Unbemanntes Fluggerät nach Anspruch 9, wobei die Reinigungseinheit folgendes aufweist:
- eine oder mehrere motorbetriebene Reinigungsbürsten (17), die zur Reinigung des zu reinigenden Sensors in Rotation versetzt werden;
- einen Reinigungsflüssigkeitstank (15);
- eine Düse (14), mit der die Reinigungsflüssigkeit auf den zu reinigenden Sensor gesprüht wird;
- eine Pumpe, die Reinigungsflüssigkeit aus dem Reinigungsflüssigkeitstank (15) entnimmt und der Düse zuführt; und
- einen motorbetriebenen Propeller (18), der so angeordnet ist, dass für die Reinigungsbürsten ein Anpressdruck auf den zu reinigenden Sensor erzeugt wird.

## Claims

1. A method for cleaning vehicle sensors, in which
- a vehicle sends position data of the vehicle via a mobile data connection of a service station;
- the service station receives (1) the position data and causes an unmanned aircraft suitable for cleaning vehicle sensors to fly to the vehicle;
- the unmanned aircraft flies (2) to the vehicle on the basis of the received position data of the vehicle;
- the unmanned aircraft is positioned (3) in the vicinity of the vehicle on the basis of position data of a sensor of the vehicle to be cleaned so that it is possible to clean the sensor to be cleaned;
- the unmanned aircraft cleans (4) the sensor (7); and
- the unmanned aircraft returns (5) to the service station after the cleaning operation is completed.

2. The method according to claim 1, wherein dirt accumulation on the sensor (7) is detected by the vehicle.

3. The method according to claim 2, wherein an autonomously driving vehicle is stopped automatically when a safe driving operation is no longer ensured due to dirt accumulation on the sensor.

4. The method according to either claim 2 or claim 3, wherein the vehicle sends the service station an indication of the dirty sensor via the mobile data connection.

5. The method according to claim 4, wherein the vehicle sends the service station information regarding the vehicle model and/or the position data of the sensor to be cleaned in the vehicle-fixed coordinate system via the mobile data connection, and the service station sends the information regarding the vehicle model and/or the position data or data derived therefrom to the unmanned aircraft.

6. An unmanned aircraft for cleaning vehicle sensors, the unmanned aircraft comprising a drive unit, which has a number of motor-driven rotors (8) which generate lift and/or propulsion for the unmanned aircraft, a navigation unit (9), a control unit (10), a cleaning unit (13-18) and a camera unit (11),
**characterized in that**
- an evaluation unit (12) is provided which is designed to determine the position of the sensor relative to the unmanned aircraft for a sensor to be cleaned that is optically detected by means of the camera unit;
- the control unit (10) is designed to control the drive unit by means of navigation data of the navigation unit in such a way that the unmanned aircraft is to fly to the vehicle on the basis of position data of a vehicle which has received a service station via a mobile data connection, and is to be positioned on the vehicle on the basis of position data of a sensor (7) of the vehicle to be cleaned so that cleaning of the sensor to be cleaned is possible, and is to return to the service station after the cleaning process is completed; and
- the cleaning unit (13-18) is designed to carry out cleaning of the sensor to be cleaned.

7. The unmanned aircraft according to claim 6, wherein the cleaning unit comprises a compressed air tank (13) which is connected to an electronically controllable valve followed by a pressure reducer and a compressed air cleaning apparatus.

8. The unmanned aircraft according to claim 7, wherein the cleaning unit has a cleaning liquid tank (15) and the cleaning liquid is added to the compressed air so that the surface to be cleaned is exposed to an air-liquid mixture.

9. The unmanned aircraft according to claim 6, wherein the cleaning unit can be lowered by means of a cable winch (16) or a telescopic rod to position the cleaning unit in front of the sensor to be cleaned.

10. The unmanned aircraft according to claim 9, wherein the cleaning unit comprises the following:
- one or more motor-driven cleaning brushes (17) which are set in rotation for cleaning the sensor to be cleaned;
- a cleaning liquid tank (15);
- a nozzle (14) by means of which the cleaning liquid is sprayed onto the sensor to be cleaned;
- a pump which removes cleaning liquid from the cleaning liquid tank (15) and supplies the nozzle; and
- a motor-driven propeller (18) which is arranged such that a contact pressure on the sensor to be cleaned is generated for the cleaning brushes.

## Revendications

1. Procédé de nettoyage de capteurs de véhicule, dans lequel
- un véhicule envoie, par le biais d'une connexion de données mobile d'une station de service, des données de position du véhicule ;
- la station de service reçoit (1) les données de position et amène un engin volant sans pilote, adapté pour le nettoyage des capteurs de véhicule, à voler jusqu'au véhicule ;
- l'engin volant sans pilote vole (2) jusqu'au véhicule sur la base des données de position reçues du véhicule ;
- l'engin volant sans pilote se positionne (3), sur la base de données de situation d'un capteur à nettoyer du véhicule, à proximité du véhicule, de sorte qu'un nettoyage du capteur à nettoyer soit possible ;
- l'engin volant sans pilote nettoie (4) le capteur (7) ; et
- l'engin volant sans pilote retourne (5) à la station de service après la fin du processus de nettoyage.

2. Procédé selon la revendication 1, dans lequel l'encrassement du capteur (7) est détecté par le véhicule.

3. Procédé selon la revendication 2, dans lequel un véhicule à conduite autonome est arrêté automatiquement lorsqu'un mode de conduite sûr n'est plus garanti en raison de l'encrassement du capteur.

4. Procédé selon la revendication 2 ou 3, dans lequel le véhicule envoie à la station de service une indication du capteur encrassé par le biais de la connexion de données mobile.

5. Procédé selon la revendication 4, dans lequel le véhicule envoie à la station de base, par le biais de la connexion de données mobile, une information sur le modèle de véhicule et/ou les données de situation du capteur à nettoyer dans un système de coordonnées solidaire du véhicule et la station de base envoie l'information sur le modèle de véhicule et/ou les données de situation ou des données qui en sont dérivées à l'engin volant sans pilote.

6. Engin volant sans pilote destiné au nettoyage de capteurs de véhicule, dans lequel l'engin volant sans pilote comprend une unité d'entraînement avec une pluralité de rotors (8) entraînés par moteur, qui produisent une portance et/ou une traînée pour l'engin volant sans pilote, une unité de navigation (9), une unité de commande (10), une unité de nettoyage (13-18) et une unité de caméra (11),
**caractérisé en ce que**
- une unité de traitement (12) est prévue, qui est conçue pour déterminer, pour un capteur à nettoyer détecté par voie optique au moyen de l'unité de caméra, la position du capteur par rapport à l'engin volant sans pilote ;
- l'unité de commande (10) est conçue pour, au moyen de données de navigation de l'unité de navigation, commander l'unité d'entraînement de telle sorte que l'engin volant sans pilote, sur la base de données de position d'un véhicule, qu'une station de service a reçues par le biais d'une connexion de données mobile en provenance du véhicule, vole vers le véhicule et se positionne sur le véhicule sur la base de données de situation d'un capteur (7) à nettoyer du véhicule, de sorte qu'un nettoyage du capteur à nettoyer soit possible et revienne, après la fin du processus de nettoyage, vers la station de service ; et
- l'unité de nettoyage (13-18) est conçue pour réaliser le nettoyage du capteur à nettoyer.

7. Engin volant sans pilote selon la revendication 6, dans lequel l'unité de nettoyage présente un réservoir d'air comprimé (13), qui est raccordé à une soupape à commande électronique, suivi d'un réducteur de pression et d'un appareil de nettoyage à air comprimé.

8. Engin volant sans pilote selon la revendication 7, dans lequel l'unité de nettoyage présente un réservoir de liquide de nettoyage (15) et le liquide de nettoyage est incorporé à l'air comprimé, de sorte que la surface à nettoyer soit irradiée avec un mélange d'air et de liquide.

9. Engin volant sans pilote selon la revendication 6, dans lequel l'unité de nettoyage peut être abaissée par un treuil à câble (16) ou une tige télescopique, afin de positionner l'unité de nettoyage devant le capteur à nettoyer.

10. Engin volant sans pilote selon la revendication 9, dans lequel l'unité de nettoyage présente les éléments suivants :
- une ou plusieurs brosses de nettoyage (17) entraînées par moteur, qui sont mises en rotation pour le nettoyage du capteur à nettoyer ;
- un réservoir de liquide de nettoyage (15) ;
- une buse (14), avec laquelle le liquide de nettoyage est pulvérisé sur le capteur à nettoyer ;
- une pompe, qui prélève le liquide de nettoyage depuis le réservoir de liquide de nettoyage (15) et l'alimente à la buse ; et
- une hélice (18) entraînée par moteur qui est agencée de telle sorte qu'une pression de contact soit produite sur le capteur à nettoyer pour les brosses de nettoyage.
